# EUROPEAN PATENT APPLICATION

(11) **EP 2 934 015 A1**
(43) Date of publication of application: **21.10.2015**
(21) Application number: 15163521.6
(22) Date of filing: 14.04.2015
(51) Int. Cl.: H04N 21/262, H04H 60/46, H04H 60/65, H04N 21/2668, H04N 21/462, H04N 21/466, H04N 21/475, H04N 21/482

(54) **MEDIA GATEWAY FOR SCHEDULING CONTENT**

(30) Priority: 14.04.2014 US 201414252510
(71) Applicant: Nagravision S.A., 1033 Cheseaux-sur-Lausanne (CH)
(72) Inventor: Morten, Glenn, San Fransisco, CA California 94111 (US)
(74) Representative: Leman Consulting S.A.

(57) **Abstract**

Methods and systems to schedule media content using a media gateway are presented. In an example method, data is collected that identifies content accessed from one or more communication networks via the media gateway by a user. Further content items for presentation to the user are determined based on the collected data. The further content items may be sourced by content channels received at the media gateway. The further content items may then be scheduled for presentation to the user. The scheduling may include defining a sequence in which the further content items are to be presented to the user.

## Description

### FIELD

This application relates generally to the field of electronic communications and, in an example embodiment, to scheduling content using a media gateway.

### BACKGROUND

Providers of television programming often select content for delivery to consumers on separate linear programming channels, such as national television networks, cable-based networks, and local television stations, based on national and regional trends and events. Consequently, to deliver content with sufficient viewer interest to maximize advertising revenue, the providers typically bundle a large number of linear channels together in programming packages. In some cases, the provider of the programming may also supply an electronic programming guide and related search interface that facilitates user searches of programs of particular interest to the user that may be delivered over the channels.

Video-on-demand (VOD) systems provide an alternative means of providing content to a user. Such systems often provide a search interface, possibly along with a content recommendation engine, to facilitate discovery of content of particular interest to the viewer. The content recommendation engine may operate by way of item-to-item relationships, whereby the engine may recommend a particular content item to a user that is similar in some way to another content item that the user previously accessed. With such an interface, the user may perform an active role in the actual selection of the content being recommended. In the alternative, or in addition, the recommendation engine may employ a user profile that includes demographic information, interests, and the like explicitly provided by the user to generate the content recommendations.

### BRIEF DESCRIPTION OF DRAWINGS

Embodiments are illustrated by way of example and not limitation in the figures of the accompanying drawings, in which like references indicate similar elements and in which:
FIG. 1 is a block diagram of an example media gateway employable for scheduling content for a user;
FIG. 2 is a block diagram of an example media gateway employable for scheduling content that utilizes one or more data security measures;
FIG. 3 is a flow diagram of an example method to schedule content;
FIG. 4 is a graphical representation of programs scheduled from multiple broadcast channels for presentation to at least one user;
FIG. 5 is a flow diagram of an example method of more than one program at a time being scheduled from multiple broadcast channels for presentation to at least one user;
FIG. 6 is a flow diagram of an example method of recording a program to be scheduled for presentation to at least one user;
FIG. 7 is a graphical representation of programs scheduled from multiple broadcast channels for presentation to at least one user, in which one of the programs is time-shifted;
FIG. 8 is a flow diagram of an example method of scheduling advertising for presentation to at least one user; and
FIG. 9 is a diagrammatic representation of a machine in the example form of a computer system within which a set of instructions may be executed for causing the machine to perform any one or more of the methodologies discussed herein.

### DETAILED DESCRIPTION

In the following description, for purposes of explanation, numerous specific details are set forth in order to provide a thorough understanding of the embodiments disclosed herein. It will be evident, however, to one skilled in the art that the embodiments may be practiced without these specific details.

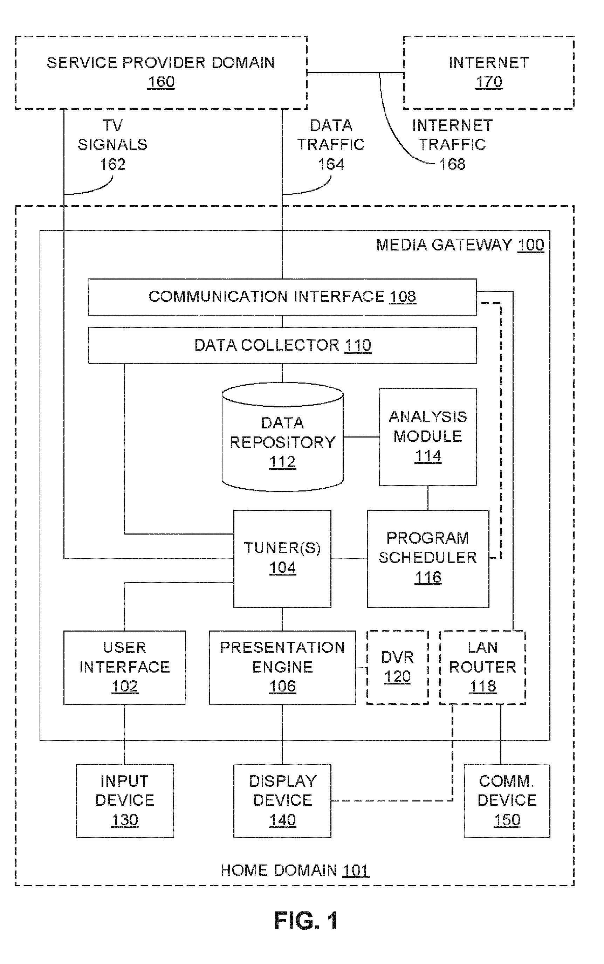

FIG. 1 is a block diagram of an example media gateway 100 employable for scheduling content for one or more users located at a home domain 101. In one example, the media gateway 100 may be a home media gateway, in which components such as, for example, a television set-top box, an Internet gateway, and/or a wireless router may be co-located. Further, while the home domain 101 may be associated with a particular household, the home domain 101 may also apply to any particular location associated with one or more users, such as a business location, a restaurant, a bar, and so on. In one example, the media gateway 100 facilitates access to traditional television signals 162 (e.g., cable television signals, terrestrial ("over the air") television signals, and/or satellite television signals) and media content by way of data traffic 164 accessible by way of a communication network, such as a wide area network (WAN) (e.g., the Internet). FIG. 1 depicts the data traffic 164 and the television signals 162 as being received at the media gateway 100 from a service provider domain 160 that provides both traditional television service and Internet connectivity, as may be expected with a cable television provider. In other examples, the media gateway 100 may receive the television signals 162 via satellite by way of a satellite antenna, via a terrestrial transmission antenna, and via other means.

In one embodiment, as is described in greater detail below, the media gateway 100 utilizes previous user accesses to media content on the Internet 170, previous user channel selections of television content, and/or indications of other media content consumption at the home domain 101 to select content for one or more users for presentation at the home domain 101. Further, the selected media content may include particular programs from multiple television channels, as well as additional media content searched or retrieved from the Internet 170 or another communication network. In one implementation, the content may be provided to the user over a generated "household channel" not specifically related to any particular broadcast television channel received at the media gateway 100. A user may thus tune to the household channel to receive television programming and/or other content that is likely to be of at least some interest to the user without the user searching for that content from the multiple media content sources.

As illustrated in FIG. 1, the media gateway 100 may be a single device that provides access to both traditional television signals 162 and content on the Internet 170 and/or other communication networks by way of data traffic 164. Accordingly, the media gateway 100 may operate as both a television set-top box and an Internet gateway or modulator-demodulator (modem). In other examples, the functions supplied by the media gateway 100 may be distributed among two or more devices. For example, the media gateway 100 may include separate set-top box and Internet gateway devices. Other configurations of components providing the functionality of the media gateway 100, as described below, are also possible.

The media gateway 100, as depicted in FIG. 1, may include one or more tuners 104 that receive multiple channels of television programming by way of television signals 162. Under a user selection of a channel, as received from an input device 130 (e.g., a remote control device) via a user interface 102, the tuner 104 may tune to the selected channel and forward the resulting data to a presentation engine 106, which then processes the data of the selected channel to generate video and/or audio signals that are compatible for a display device 140 to present to one or more users. The display device 140 may be, for example, a flat panel display, a cathode ray tube (CRT), or any other display device configured to display broadcast television programming, video-on-demand (VOD) content, electronic program guide (EPG) content, and other information of interest provided via the presentation engine 106 to the user. The processing provided in the presentation engine 106 may include, for example, decompression, and possibly decryption, of the data of the selected channel to provide a standard or high definition video signal and associated audio signal that are compatible with the display device 140. The presentation engine 106 may be communicatively coupled with the display device 140 by way of a High-Definition Multimedia Interface (HDMI) cable, component video cable, composite video cable, or a coaxial cable, for example.

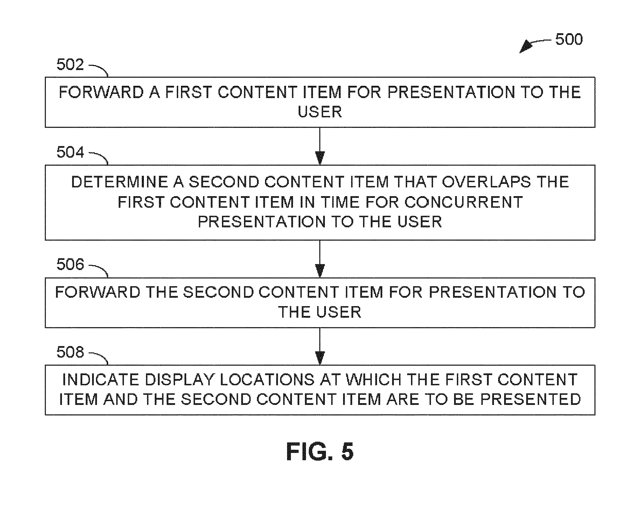

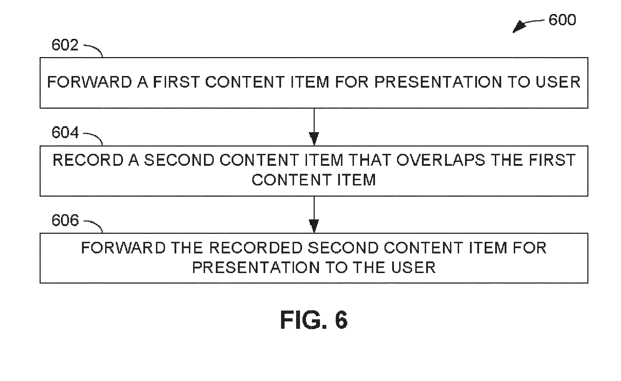

Also possibly included in the media gateway 100 may be a digital video recorder (DVR) 120 that may record programs carried on one or more of the channels for subsequent viewing by the user via the presentation engine 106 and the display device 140. Potential use of the DVR 120 in scheduling programs or other content for the user by way of a household channel is described in greater detail below in conjunction with FIGS. 5 and 6.

The media gateway 100 may also include a wired and/or wireless local area network (LAN) router 118, such as an Ethernet router and/or a Wi-Fi® router. The LAN router 118 may allow a communication device 150 located in the home domain 101, including, but not limited to, a desktop computer, a laptop computer, a tablet computer, a smartphone, and a gaming system, to access the Internet 170 or other communication network by way of a communication interface 108 and the service provider domain 160. In some implementations, the display device 140 may be a smart television or similar device configured to present programs from one or more television channels provide by the tuner 104 as well as to access media content from the Internet 170 via the LAN router 118 and the communication interface 108. In one example, the service provider domain 160 may provide access to both the Internet 170 and the broadcast television signals 162, as shown in FIG. 1. In other examples, separate service providers, with separate associated domains, may provide access to the Internet 170 and the television signals 162.

To provide the household channel mentioned above, the media gateway 100 may also include a data collector 110 configured to collect data that identifies content that a user has accessed and/or searched via the Internet 170 by way of a communication device 150. This identifying information may include, for example, data from the actual content accessed by the user, file names or other identifiers of the actual content accessed by the user, a Uniform Resource Locator (URL) of the content accessed by the user, search terms entered into a search engine by the user, and so forth.

In one example, the data collector 110 may be associated with, or incorporated within, a network shim. In various examples, the network shim may include software that parses or otherwise processes requests for information from the Internet 170 before exiting the media gateway 100 on its way to the service provider domain 160 and collects identifying information associated with media content that may be searched or requested by the user. The network shim may also parse or otherwise process data returning from the Internet 170 via the service provider domain 160 for identifying information associated with returned content, search results, and the like.

The data collector 110, in one example, may also collect information identifying the various broadcast television channels and/or associated programs that a user has selected for viewing and/or recording, such as by way of the tuner 104 and possibly the DVR 120. Such information may include, for example, channel numbers of programming channels viewed or recorded by the user, periods of time during which a particular channel was viewed or recorded by the user, names or identifiers of specific programs viewed or recorded by the user, whether a particular recorded program was viewed by a user, the number of times a particular recorded program was viewed, and so on.

In one example, the data collector 110 may store the collected identification data in a data repository 112 residing within the media gateway 100. In some embodiments, the data collector 110 may encrypt the collected data prior to storing the data in the data repository 112 to reduce the risk of the data being extracted and read by an unauthorized third party. In yet other implementations, the data repository 112 may be a data storage device located external to the media gateway 100, such as a data repository located within the service provider domain 160.

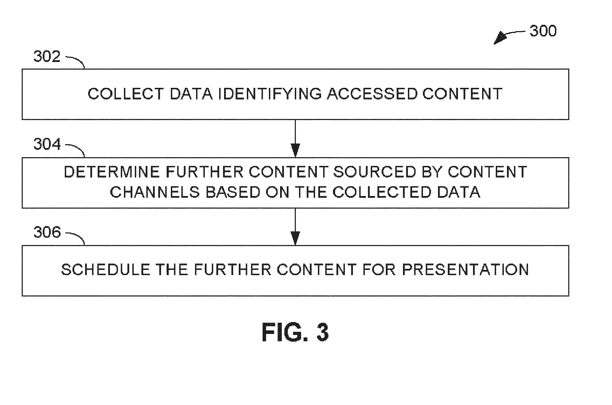

The media gateway 100 may also include an analysis module 114 configured to retrieve at least some of the collected data stored in the data repository 112, decrypt the collected data (if the collected data has been encrypted), and process the data to determine media content that may be of interest to the user. The analysis module 114 may forward the information identifying the media content of interest to a program scheduler 116 that may schedule the determined content for presentation on a particular "household channel" available to the user via the tuner 104 but not specifically associated with any particular broadcast channel received at the media gateway 100. In one example, the household channel may be available only to the display device 140 coupled with the media gateway 100 for presentation to the user. In other examples, other communication devices 150 may receive the same or related information that the analysis module 114 has determined to be of interest to the user. In some examples, the functionality of the analysis module 114 and the program scheduler may be combined into a single function component. Embodiments of the analysis module 114 and the program scheduler 116 are described in greater detail below in conjunction with FIGS. 3-7.

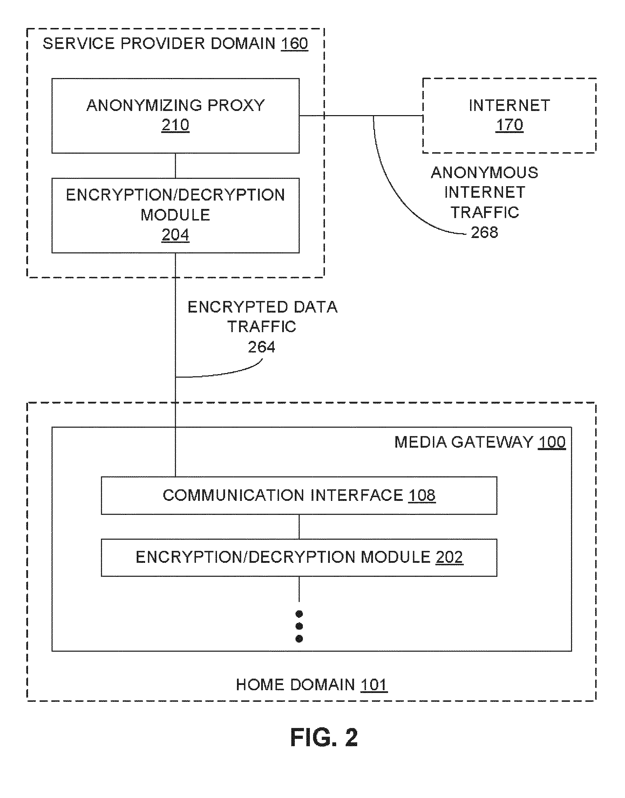

FIG. 2 is a block diagram of an example media gateway 100 employable for scheduling content that further employs one or more data security measures. In lieu of, or in addition to, the encrypting of data by the data collector 110 prior to storage in the data repository 112, as discussed above with respect to FIG. 1, an encryption/decryption module 202 of the media gateway 100 may encrypt data traffic transmitted via the communication interface 108 as encrypted data traffic 264 to the service provider domain 160, wherein a corresponding encryption/decryption module 204 located at the service provider domain 160 may decrypt the received data prior to forwarding the data to the Internet 170. Conversely, the encryption/decryption module 204 of the service provider domain 160 may encrypt data traffic to be transmitted to the media gateway 100, wherein the encryption/decryption module 202 may decrypt the encrypted data traffic 264 received via the communication interface 108. Accordingly, no unencrypted data may be passed between the media gateway 100 and the service provider domain 160 in such examples.

Additionally, the service provider domain 160 may include an anonymizing proxy 210 that transforms data traffic originating from the media gateway 100, such as requests for web pages and other information accessible via the Internet 170, resulting in anonymous Internet traffic 268, so that the particular home domain 101 is not identifiable outside the service provider domain 160. In an example, the anonymizing proxy 210 is located at an outbound access of the service provider domain 160 or in a "demilitarized zone" (DMZ) or perimeter sub-network associated with the service provider domain 160.

FIG. 3 is a flow diagram of an example method 300 to schedule content for presentation to at least one user. In the following examples, the media gateway 100, including the various components provided therein, is presumed to perform the various operations of the method 300. However, other devices or components not specifically described herein may perform the operations of the method 300 in other implementations. Also, while the operations 302 through 308 of FIG. 3 (as well as the operations of other methods illustrated herein) are shown as occurring in a specific order, other orders of operation, including concurrent execution of two or more operations, are also possible.

In the method 300, the data collector 110 may collect data identifying content accessed and/or searched by a user of the media gateway 100 (operation 302). As described above, the identifying data may include, for example, information passing through the communication interface 108 of the media gateway 100 between Internet 170 and the LAN router 118 of FIG. 1. Requests or searches for content may be originated by a communication device 150, such as a smartphone, desktop computer, laptop computer, tablet computer, gaming system, or the like. Further, the display device 140, such as a smart television equipped with LAN access, may also generate such content requests or searches. In addition, the identifying data may include information provided by the tuner 104 regarding various broadcast television channels and/or programs that a user has selected for viewing and/or recording. Data collected as a result of accessed content from other communication networks via the media gateway 100 are also possible. Examples of the various types of information possibly collected by the data collector 110 are provided above in connection with FIG. 1. As indicated earlier, the data collector 110 may store this information in the data repository 112 of the media gateway 100.

The analysis module 114 of FIG. 1 may then determine other items of content of possible interest to the user associated with the home domain 101 based on the stored information in the data repository 112 (operation 304). For example, if the user has viewed and/or recorded several episodes of a particular television program, the analysis module 114 may determine that the user may be interested in an upcoming episode of that same program. The analysis module 114 may determine the existence of the upcoming episode by way of EPG data received from the service provider domain 160, or from another information source. The accessing of information over the Internet 170 by the user that is specifically related to the program, such as websites and weblogs specifically provided for fans of the program, information regarding particular actors performing in the program, and so on, may also be employed in the determination that the user may be interested in an upcoming episode of the program.

In another implementation, a user's interest in a particular sports team, as indicated by the user viewing and/or recording several games involving that team, may cause the analysis module 114 to determine that the user may be interested in future televised games involving the same team. In addition, the analysis module 114 may further base its decision on the user accessing information over the Internet 170 specifically regarding that team, such as sports stories from local and national sports websites, information provided on the official website of the sports team, sports weblogs and chat rooms related to the team, and purchasing information related to game tickets, merchandise, and other items related to the team.

In yet other implementations, the analysis module 114 may determine that the user may be interested in other television programs that the user has not seen before, or in which the user has not expressed a particular interest. For example, if the user has indicated by way of previous viewing habits and other information that the user holds an interest in action films and programs, the analysis module 114 may determine that the user may be interested in an upcoming initial episode of a new action program. Similarly, if the user has indicated an interest in a particular actor, the analysis module 114 may determine that an upcoming program in which that same actor appears may be of interest to the user.

With respect to sports programs, the analysis module 114 may determine that games involving conference or divisional rivals that may have an impact on the favorite team of the user, such as whether the favorite team of the user will make the playoffs, may be of interest to the user. In another example, the analysis module 114 may determine whether a favorite player of the user, such as one that formerly played on the favorite team of the user, is scheduled to play in an upcoming game, and if so, may determine that the game may be of interest to the user.

In some examples, the analysis module 114 may determine that a portion of a particular program, as opposed to an entire program, may be of interest to a user. For example, the user may have exhibited a proclivity to watch a particular segment of a program, such as the weather segment of a local news program. In response, the analysis module 114 may determine that the user may be interested in viewing only that particular segment or portion of that program.

In addition to television programs and other television-based content, the analysis module 114 may determine or decide upon other content of potential interest to the user, such as content available on the Internet 170, including, but not limited to, video clips or programs, audio clips, still images, and textual information. Such information may be provided from the Internet 170 via the communication interface 108 and the LAN router 118 to a communication device 150, as described above, or a smart television serving as the display device 140.

Continuing with the method 300, the program scheduler 116 (or, more generally, the scheduler 116) may schedule the determined content of interest, as determined by the analysis module 114, for subsequent presentation to the user (operation 306). In an embodiment, the program scheduler 116 schedules at least some of the determined content for presentation over a household channel that the user may select via the tuner 104, much in the same way the user may select any of the available broadcast television channels. Such scheduling may involve, for example, selecting content that may define or form a sequence in which the content items are to be presented to the user. In one example, the household channel corresponds to a selectable channel number that is different from the channel numbers associated with any of the broadcast channels.

In some implementations, the program scheduler 116 determines a time at which each of the content items of possible interest to the user, as determined by the analysis module 114, is available for presentation. Based at least on this timing information, the program scheduler 116 may schedule each of the items of content of possible interest to the user for presentation on the household channel. At the time the scheduled item of content is available, the program scheduler 116 may forward the item for presentation to the user via the presentation engine 106 (operation 308).

If the item of content of possible interest to the user is a television program available over one of the broadcast television channels, the program scheduler 116 may select that particular channel via the tuner 104 for presentation to the user over the household channel at the appropriate time. In an embodiment, if more than one item of content is available at a specific time, the program scheduler 116 may prioritize one broadcast program over another for a particular time period for presentation to the user. More specifically, the analysis module 114 and/or the program scheduler 116 may take into account multiple factors, such as a number of previous user accesses to the same or similar content, a level of interest exhibited by the user in a category of content (e.g., a movie or television program genre, or a particular sport or sports team), a level of interest exhibited in a particular individual associated with the content (e.g., an actor, a director, a historical figure, or a sports figure), and the like. Further, the analysis module 114 or the program scheduler 116 may weight each of multiple factors based on an importance of each factor, as determined by any of the analysis module 114, the program scheduler 116, or the user. Further, the analysis module 114 or the program scheduler 116 may assign a score based on the weighted or unweighted multiple factors and then prioritize the content based on that score.

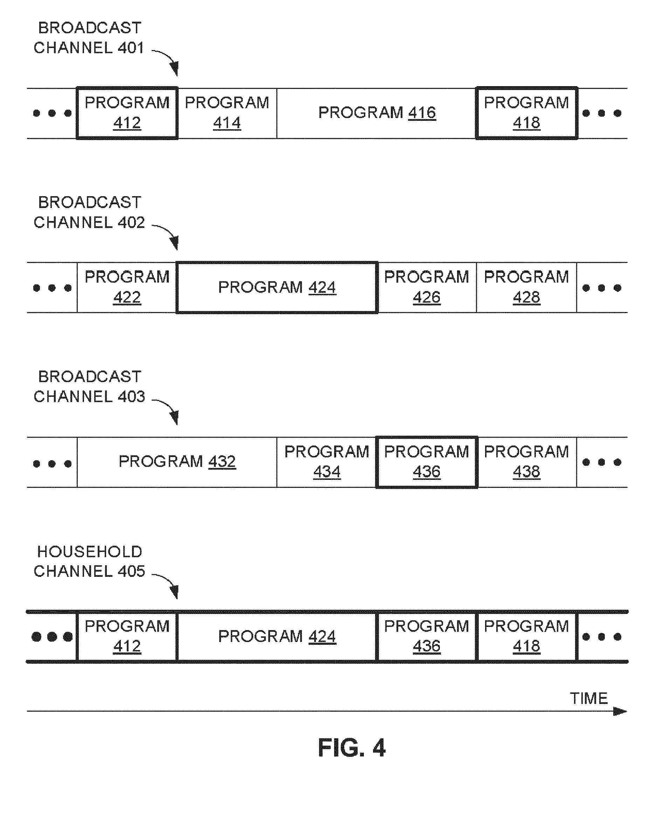

FIG. 4 is a graphical representation of the scheduling of programs from multiple broadcast channels for presentation to at least one user, such as over a household channel 405. Depicted therein against a time axis are representations of programs carried over three different broadcast channels 401, 402, and 403. In one example, program scheduler 116 may determine which program is being presented at what time on each of the broadcast channels 401, 402, and 403 by consulting EPG information delivered from the service provider domain 160 to the media gateway 100. More specifically, broadcast channel 401 carries programs 412, 414, 416, and 418, with program 416 being twice the length in time as any of the other programs 412, 414, and 418. During that same time period, broadcast channel 402 carries programs 422, 424, 426, and 428, with program 424 being twice as long as the other programs 422, 426, and 428. Also during that time, broadcast channel 403 presents, in order, programs 432, 434, 436, and 438, with program 432 occupying twice the time as each of programs 434, 436, and 438.

In one example, the program scheduler 116 compares scores or other indications of a determined relative interest of the user in the programs 412-438 for each time period. As shown in FIG. 4, the program scheduler 116 may determine that program 412 of broadcast channel 401 is likely to be of more interest to the user than program 422 of broadcast channel 402 or program 432 of broadcast channel 403. Accordingly, the program scheduler 116 may schedule 412 for its particular time period on household channel 405 by directing broadcast channel 401 to the household channel 405 during that time period.

For the next time period, the program scheduler 116 may determine that program 424 of broadcast channel 402 is more likely to be of interest to the user compared to the programs 414 and 416 of broadcast channel 401 and program 434 of broadcast channel 403, and thus may schedule broadcast channel 402 to the household channel 405 for that time period. Similarly, the program scheduler 116 may determine that program 436 of broadcast channel 403 may be of more interest to the user than program 416 of broadcast channel 401 and program 426 of broadcast channel 402, thus scheduling broadcast channel 403 to be directed to the household channel 405 during the corresponding time period for presentation to the user. Next, the program scheduler 116 may determine that program 418 of broadcast channel 401 may be of higher interest to the user than program 428 of broadcast channel 402 or program 438 of broadcast channel 403, thus scheduling broadcast channel 401 to be shown on the household channel 405 for presentation to the user.

In one example, the media gateway 100 may include multiple tuners 104 that may be employed to reduce switching times between the broadcast channels 401, 402, and 403. For example, when switching between the end of program 436 of broadcast channel 403 and the beginning of program 418 of broadcast channel 401 for presentation on the household channel 405, one tuner 104 may be tuned to broadcast channel 401 to anticipate the presentation of that channel on the household channel 405 while another tuner 104 is presenting program 436 of broadcast channel 403 on the household channel 405.

In one example, the program scheduler 116 may select at least a portion of a program for presentation via the household channel 405 based on whether a scheduled program begins before the current time period or extends beyond the current time period. For instance, with respect to FIG. 4, the program scheduler 116 may determine that program 416 of broadcast channel 401 or program 434 of broadcast channel 403 may be of slightly more interest to the user than program 424 of broadcast channel 402. However, as the program scheduler 116 may have determined that program 424 is of significantly more interest to the user than program 414 of broadcast channel 401 or program 432 of broadcast channel 403 of the preceding time period, the program scheduler 116 may thus cause program 424 to be presented over the household channel 405 in its entirety.

In yet other implementations involving at least partially overlapping programs of possible interest, the program scheduler 116 may allow more than one program to be presented simultaneously, such as, for example, by way of a picture-in-picture (PIP) display on the display device 140. To that end, FIG. 5 presents a flow diagram of an example method 500 of scheduling more than one program at a time from multiple broadcast channels for presentation to at least one user, such as over a household channel. In the method 500, the program scheduler 116 may forward a first television program or other content item determined by the analysis module 114 to be of interest for presentation to the user (operation 502). The analysis module 114 and/or the program scheduler 116 may determine that a second content item that overlaps the first content item in time may be presented to the user concurrently with the first content item (operation 504). For example, the program scheduler 116 may determine that a second baseball game that begins near the scheduled end of a first baseball game already being presented to the user may also be presented. Presuming such a determination has been made, the program scheduler 116 may forward the second content item for presentation to the user (operation 506). Also, in some implementations, the program scheduler 116 may indicate a display location on the display device 140 of one or both of the first and second content items (operation 508). For example, the program scheduler 116 may determine that the first content item should be displayed in a large, primary window of the display device, while the second content item should be displayed in a smaller, PIP window, using separate tuners 104. Once the presentation of the first content item is complete, the second content item may then be presented in the primary window while the PIP window is removed from the display. In at least some implementations, the user may control which content item is presented in which window.

FIG. 6 is a flow diagram of an example method 600 of recording a program to be scheduled for presentation to at least one user, such as over a household channel, as described above. Accordingly, as opposed to presenting more than one program or item of content concurrently, the program scheduler 116 may record and delay at least one program for presentation to the user until after a currently presented program has completed. In the method 600, the program scheduler 116 may forward a first television program or other content item determined by the analysis module 114 to be of interest for presentation to the user (operation 602) using a first tuner 104. The program scheduler 116 may also record a second content item of possible user interest that at least partially overlaps in time the first content item (operation 604) using a second tuner 104. In at least one embodiment, the program scheduler 116 may use the DVR 120 of the media gateway 100 of FIG. 1 for that purpose. After completion of the presentation of the first content item to the user, the program scheduler 116 may then forward the recorded second content item for presentation to the user (operation 606). In one example, the second content item may still be in the process of being broadcast. Consequently, the program scheduler 116 may continue to record the second content item while forwarding the initial portion of the second content item for presentation to the user.

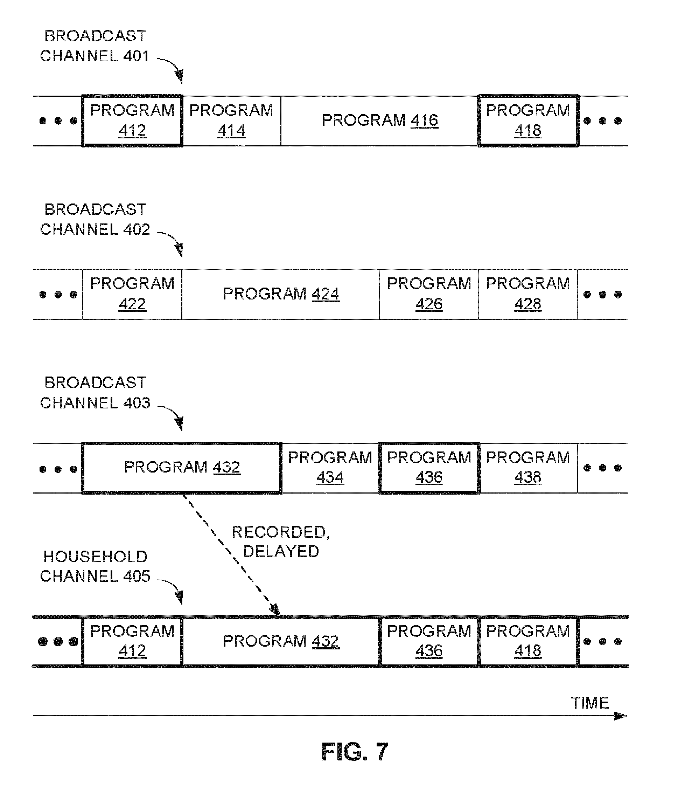

FIG. 7 is a graphical representation of the scheduling of programs from multiple broadcast channels to a household channel for presentation to at least one user, in which one of the programs is time-shifted. Broadcast channels 401, 402, and 403 carry broadcast programs 412-438, as described above in reference to FIG. 4. In this particular example, however, the analysis module 114 and/or the program scheduler 116 may have determined that program 432 of broadcast channel 403 is more likely to be of interest to the user than program 414 of broadcast channel 401 or program 424 of broadcast channel 402. As a result, the program scheduler 116 may record and delay the presentation of program 432 until program 412 of broadcast channel 401 on the household channel 405 has completed. In the example of FIG. 7, program 432 is still being received at the media gateway 100 at the time the initial portion of the program 432 is to be presented to the user via the household channel 405. In other examples, the presentation of the recorded program may be delayed for a longer period of time such that the entire program is recorded prior to presentation to the user.

In some implementations, the analysis module 114 and/or the program scheduler 116 may be configured to alter or adapt the schedule to emerging events, such as, for example, breaking news items, sporting event updates, recent programming schedule changes, and so forth. For example, in response to a breaking news item, such as an earthquake or tornado, a news report currently airing may be inserted immediately into the programming of the household channel 405 if the user has exhibited a propensity to change programming channels manually to view similar types of news reports. In another example, the program scheduler 116 may present a message on the display device 140 indicating the availability of the news report and asking the user whether to present the news report or continue with the current programming on the household channel 405.

In another example, in response to a score update indicating a close score in a televised baseball game that is not currently being displayed on the household channel 405, the program scheduler 116 may interrupt the program currently being presented over the household channel 405 with the remainder of the game if the analysis module 114 and/or the program scheduler 116 determines that the user may be interested in viewing the remainder of the game, given the close score.

In another sports-related example, the program scheduler 116 may determine that a sporting event currently being presented is likely to extend beyond its scheduled ending time. In response, the program scheduler 116 may begin showing the next scheduled program as though the sporting event concluded at the scheduled time, or may instead continue to present the current sporting event on the household channel 405 until the conclusion of the broadcast. In the latter case, the program scheduler 116 may record and delay the next scheduled program until after the conclusion of the sporting event.

The above examples regarding the adaptive nature of the program scheduler 116 in response to emerging events represent just a portion of the types of events that may be addressed by the program scheduler 116. In conjunction with these examples, the program scheduler 116 may receive a message from the service provider domain 160 or another information source informing the program scheduler 116 of the emerging event, in response to which the program scheduler 116 may perform the actions described above.

In some implementations, the program scheduler 116 may provide the user with a schedule of programs or items of content to be displayed to the user on the household channel 405. In one example, a generated schedule of the household channel 405 may be presented as part of an EPG provided by the media gateway 100 and presented on the display device 140 and/or the communication device 150.

In one example, the user may indicate by way of the input device 130 that the user is not interested in viewing one or more programs or other content items scheduled to be presented on the household channel 405, possibly including the content item currently being presented. In response to this user input, the program scheduler 116 may remove the indicated program from the schedule and update the schedule based on the remaining programs that the analysis module 114 has determined are of potential interest to the user. In addition, the analysis module 114 may take into account the user input in determining future programs or other content items of potential interest to the user, as described more particularly above.

While the discussion above is focused on the scheduling of broadcast television programs, such as programs offered by a satellite, cable, or terrestrial broadcast system, for presentation on the household channel 405, other types of content available from other sources, such as sources available via the Internet 170 or a LAN located at the home domain 101, may be presented to the user on the household channel 405. These content items may include, but are not limited to, streaming video or audio items that are broadcast live over the Internet, video or audio content (e.g., YouTube™ content) that is available generally anytime for retrieval and playback, graphical and/or textual content available from any webpage, and audio and/or video content (e.g., personal video and audio files) available on a computing system residing within the home domain 101 that is communicatively coupled to the LAN router 118. In some examples, the content available via the Internet 170 or the LAN router 118 may be inserted into "gaps" between television programs that are scheduled for presentation on the household channel 405.

Further, while the examples presented above focus on the household channel 405 being presented to the user via the display device 140, such as a television or video monitor, the household channel 405 or similar channel or data stream may be presented to the user using the communication device 150 via the LAN router 118 in other implementations. Further, the media gateway 100 or the service provider domain 160 may be capable of delivering the household channel 405 or other channel or stream for a particular user to the communication device 150 of the user while the communication device 150 is located outside the home domain 101 if the communication device 150 is communicatively connected to the service provider domain 160. In yet other examples, the communication device 150 may serve as a "second screen" device, by which the program scheduler 116 may provide the communication device 150 content of potential interest to the user at the same time the program scheduler 116 is providing content via the display device 140. In some implementations, the content provided to the communication device 150 may or may not be related to the content presented at the display device 140.

While the embodiments above also focus on a data repository 112 that collects data indicating interests of one or more users as a group, other implementations may track the data for each user separately within the data repository 112. For example, the data collector 110 may determine an identity of a user associated with the access or search of an item of media content, and then store an indication of the user identity in association with the data collected for that access or search in the data repository 112. The analysis module 114 may then determine content of potential interest for each individual user identified in the data repository 112 based on the data associated with that individual user. The program scheduler 116 may then schedule the programs of interest for a particular user via the household channel 405 when informed which user is currently watching the display device 140. The program scheduler 116 may employ any of several methods for determining the identity of the current user, including, but not limited to, explicit user entry of user identity via the input device 130, a fingerprint scan of the user via the input device 130, and user facial recognition by way of a camera (not explicitly shown in FIG. 1) coupled to the media gateway 100. In other examples, the program scheduler 116 may generate multiple household channels 405, with each household channel 405 corresponding to a user represented by data collected in the data repository 112. Further, the user may access each of the household channels 405 by a unique channel number, similar to those associated with the broadcast channels 401, 402, and 403, so that a user may access his or her corresponding household channel 405.

Many of the programs presented on the household channel 405 may include advertising as originally presented on the originating broadcast channel 401, 402, and 403. As such advertising is often placed within specific programs to reach an audience that is more likely to view the corresponding program, the advertising may be more effective as a result of the program scheduler 116 determining that the program may be of particular interest to the user. In other examples, advertising may be specifically directed to a user in much the same way as are the programs of interest that are scheduled for presentation over the household channel.

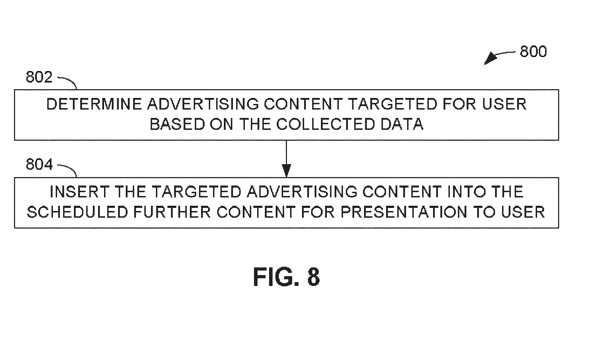

To that end, FIG. 8 is a flow diagram of an example method 800 of scheduling advertising for a household channel or similar data stream directed to at least one user. In the method 800, the analysis module 114, in addition to determining programs of potential interest to the user, may determine advertising content that may also be of interest to the user based on the collected data in the data repository 112 (operation 802). The program scheduler 116 may then insert the advertising content of potential interest for presentation to the user over the household channel 405 (operation 804). In one example, this targeted advertising content may be presented in place of advertising that was originally inserted within the program being presented to the user. Such advertising replacement may be subject to, and thus determined by, contractual agreements between the advertisers and the providers of the programs. In other implementations, commercial breaks within the program may be extended by time-shifting using the DVR 120 so that the targeted advertising may be inserted without removing the advertising that was previously inserted within the program. The targeted advertising may be downloaded from the service provider domain 160 or other advertising sources to the media gateway 100 and stored in the DVR 120 for presentation to the user over the household channel 405, as determined by the program scheduler 116.

In at least some of the embodiments described above, media content items may be more specifically directed to those users that may have a greater interest in viewing that content without the user actively searching for that content, and without the user providing information for a user profile. The directing of the content to the user may be based on previous content viewed by the user, as well as the accessing and/or searching of content available over the Internet or similar network. Further, as a result of directing the content that is of potential interest to the user, advertising that is included within that content may also find an audience that is more receptive to that advertising. Moreover, as a result of the collection and analysis of data that is used to identify content of potential interest to the user occurring within the media gateway of that user, and with the possible addition of data encryption and the anonymizing of Internet traffic that is transmitted externally from the media gateway, the security of data that may specifically identify the user may be significantly increased.

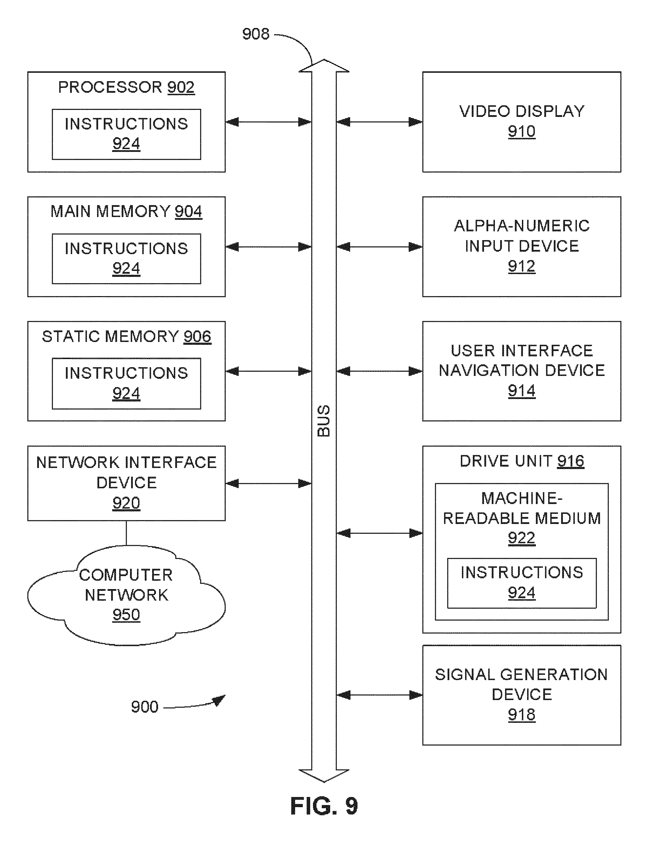

FIG. 9 illustrates a diagrammatic representation of a machine in the example form of a computer system 900 within which a set of instructions may be executed for causing the machine to perform any one or more of the methodologies discussed herein. In alternative embodiments, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer, a tablet computer, a set-top box (STB), a personal digital assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 900 includes a processor 902 (e.g., a central processing unit (CPU), a graphics processing unit (GPU) or both), a main memory 904 and a static memory 906 which communicate with each other via a bus 908. The computer system 900 may further include a video display unit 910 (e.g., a liquid crystal display (LCD) or a cathode ray tube (CRT)). The computer system 900 also includes an alphanumeric input device 912 (e.g., a keyboard), a user interface (UI) navigation device 914 (e.g., a mouse), a disk drive unit 916, a signal generation device 918 (e.g., a speaker) and a network interface device 920.

The disk drive unit 916 includes a machine-readable medium 922 on which is stored one or more sets of instructions and data structures (e.g., instructions 924) embodying or utilized by any one or more of the methodologies or functions described herein. The instructions 924 may also reside, completely or at least partially, within the main memory 904 and/or within the processor 902 during execution thereof by the computer system 900, the main memory 904 and the processor 902 also constituting machine-readable media.

The instructions 924 may further be transmitted or received over a network 950 via the network interface device 920 utilizing any one of a number of well-known transfer protocols (e.g., HyperText Transfer Protocol (HTTP)).

While the machine-readable medium 922 is shown in an example embodiment to be a single medium, the term "machine-readable medium" should be taken to include a single medium or multiple media (e.g., a centralized or distributed database, and/or associated caches and servers) that store the one or more sets of instructions 924. The term "machine-readable medium" shall also be taken to include any medium that is capable of storing, encoding or carrying a set of instructions for execution by the machine and that cause the machine to perform any one or more of the methodologies of the present inventive subject matter, or that is capable of storing, encoding or carrying data structures utilized by or associated with such a set of instructions 924. The term "machine-readable medium" shall accordingly be taken to include, but not be limited to, solid-state memories, and optical and magnetic media.

Throughout this specification, plural instances may implement components, operations, or structures described as a single instance. Although individual operations of one or more methods are illustrated and described as separate operations, one or more of the individual operations may be performed concurrently, and the operations may be performed in an order other than that illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein.

Certain embodiments are described herein as including logic or a number of components, modules, or mechanisms. Modules may constitute either software modules (e.g., code embodied on a machine-readable medium or in a transmission signal) or hardware modules. A "hardware module" is a tangible unit capable of performing certain operations and may be configured or arranged in a certain physical manner. In various example embodiments, one or more computer systems (e.g., a standalone computer system, a client computer system, or a server computer system) or one or more hardware modules of a computer system (e.g., a processor or a group of processors) may be configured by software (e.g., an application or application portion) as a hardware module that operates to perform certain operations as described herein.

In some embodiments, a hardware module may be implemented mechanically, electronically, or any suitable combination thereof. For example, a hardware module may include dedicated circuitry or logic that is permanently configured to perform certain operations. For example, a hardware module may be a special-purpose processor, such as a field-programmable gate array (FPGA) or an application-specific integrated circuit (ASIC). A hardware module may also include programmable logic or circuitry that is temporarily configured by software to perform certain operations. For example, a hardware module may include software encompassed within a general-purpose processor or other programmable processor. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein, "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured by software to become a special-purpose processor, the general-purpose processor may be configured as respectively different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple hardware modules exist contemporaneously, communications may be achieved through signal transmission (e.g., over appropriate circuits and buses) between or among two or more of the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions described herein. As used herein, "processor-implemented module" refers to a hardware module implemented using one or more processors.

Similarly, the methods described herein may be at least partially processor-implemented, a processor being an example of hardware. For example, at least some of the operations of a method may be performed by one or more processors or processor-implemented modules. Moreover, the one or more processors may also operate to support performance of the relevant operations in a "cloud computing" environment or as a "software as a service" (SaaS). For example, at least some of the operations may be performed by a group of computers (as examples of machines including processors), with these operations being accessible via a network (e.g., the Internet) and via one or more appropriate interfaces (e.g., an application program interface (API)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Some portions of this specification are presented in terms of algorithms or symbolic representations of operations on data stored as bits or binary digital signals within a machine memory (e.g., a computer memory). These algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" or "an" are herein used, as is common in patent documents, to include one or more than one instance. Finally, as used herein, the conjunction "or" refers to a non-exclusive "or," unless specifically stated otherwise.

The Abstract of the Disclosure is provided to comply with 37 C.F.R. §1.72(b), requiring an abstract that will allow the reader to quickly ascertain the nature of the technical disclosure. The Abstract is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments include more features than are expressly recited in each claim. Rather, as the following claims reflect, inventive subject matter lies in less than all features of a single disclosed embodiment. Thus the following claims are hereby incorporated into the Detailed Description, with each claim standing on its own as a separate embodiment.

Although embodiments of the present disclosure have been described with reference to specific example embodiments, it will be evident that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived therefrom, such that structural and logical substitutions and changes may be made without departing from the scope of this disclosure. This Detailed Description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "invention" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

According to one embodiment of the invention, a protection is requested for a media gateway comprising:
a data collector configured to collect data identifying content accessed from one or more communication networks via the media gateway by a user;
an analysis module configured to determine a plurality of further content items for presentation to the user based on the collected data, wherein at least two of the further content items are sourced by different content channels received at the media gateway; and
a scheduler configured to schedule the further content items for presentation to the user,
wherein the scheduling of the further content items comprises defining a sequence in which the further content times are to be presented to the user.

In one embodiment, the media gateway, further comprising:
a presentation engine configured to forward the scheduled further content items for presentation to the user.

In one embodiment, the media gateway, further comprising:
a tuner configured to:
   receive multiple channels of broadcast television content from a broadcast television content provider;
   receive a selection of one of the multiple channels from the scheduler;
   provide the selected one of the multiple channels to the presentation engine for forwarding to the user;
   receive, while providing the selected one of the multiple channels, a selection of another one of the multiple channels from the scheduler; and
   provide the selected other one of the multiple channels to the presentation engine for forwarding to the user.

In one embodiment, the media gateway, further comprising:
a tuner configured to:
   receive multiple channels of broadcast television content from a broadcast television content provider;
   provide a series of the multiple channels selected by the scheduler to the presentation engine for forwarding over a presentation channel corresponding to the user in response to the user selecting the presentation channel; and
   provide one of the multiple channels to the presentation engine for forwarding over the one of the multiple channels to the user in response to the user selecting the one of the multiple channels.

## Claims

1. A method of scheduling media content using a media gateway, the method comprising:
collecting, at the media gateway, data identifying content accessed from one or more communication networks by a user;
determining, using at least one hardware processor of the media gateway, a plurality of further content items for presentation to the user based on the collected data, wherein at least two of the further content items are sourced by different content channels received at the media gateway; and
scheduling, at the media gateway, the further content items for presentation to the user, wherein the scheduling of the further content items comprises defining a sequence in which the further content times are to be presented to the user.

2. The method of claim 1, wherein the content accessed by the user comprises broadcast television content or comprises Internet-based content.

3. The method of the claim 1 or 2, wherein the different content channels received at the media gateway comprise different channels of broadcast television content or comprise a stream of Internet-based content.

4. The method of claim 1, wherein the different content channels received at the media gateway comprise a stream of content available via a local area network communicatively coupled with the media gateway and located at a premises of the user.

5. The method of any of the claims 1 to 4, further comprising:
forwarding the sequence of the further content items for presentation to the user.

6. The method of claim 5, wherein the sequence of the further content items is forwarded for presentation to the user as a television signal compatible for reception by a television display device or for reception by a wireless communication device.

7. The method of claim 5, wherein the forwarding of the sequence of the further content items for presentation to the user comprises:
forwarding a first content item for presentation to the user;
recording a second content item that overlaps in time with the first content item; and
forwarding the recorded second content item for presentation to the user after the forwarding of the first content item.

8. The method of any of the claims 1 to 7, further comprising:
determining an identity of the user while the user accesses content from the one or more communication networks via the media gateway;
wherein the collected data comprises a user identification of the user; and
wherein the determining of the plurality of further content items for presentation to the user is based on the collected data identified with the user.

9. The method of any of the claims 1 to 8, further comprising:
encrypting, at the media gateway, the collected data; and
storing, at the media gateway, the encrypted collected data;
wherein the determining of the plurality of further content items is based on the encrypted collected data.

10. The method of any of the claims 1 to 8, further comprising:
encrypting, at the media gateway, outgoing messages transmitted via a service provider domain to at least one of the one or more communication networks that corresponds to the accessed content; and
decrypting, at the media gateway, incoming messages received from the at least one of the one or more communication networks via the service provider domain that correspond to the accessed content.

11. The method of any of the claims 1 to 10, wherein the scheduled further content items comprise advertising content as provided in the determined plurality of further content items.

12. The method of any of the claims 1 to 11, further comprising:
determining advertising content targeted for the user based on the collected data; and
inserting the advertising content targeted for the user into the scheduled further content items for presentation to the user.

13. A media gateway comprising:
a data collector configured to collect data identifying content accessed from one or more communication networks via the media gateway by a user;
an analysis module configured to determine a plurality of further content items for presentation to the user based on the collected data, wherein at least two of the further content items are sourced by different content channels received at the media gateway; and
a scheduler configured to schedule the further content items for presentation to the user, wherein the scheduling of the further content items comprises defining a sequence in which the further content times are to be presented to the user.

14. The media gateway of claim 13, further comprising:
a presentation engine configured to forward the scheduled further content items for presentation to the user.

15. The media gateway of claim 14, further comprising:
a tuner configured to:
receive multiple channels of broadcast television content from a broadcast television content provider;
receive a selection of one of the multiple channels from the scheduler;
provide the selected one of the multiple channels to the presentation engine for forwarding to the user;
receive, while providing the selected one of the multiple channels, a selection of another one of the multiple channels from the scheduler; and
provide the selected other one of the multiple channels to the presentation engine for forwarding to the user.

16. The media gateway of claim 14, further comprising:
a tuner configured to:
receive multiple channels of broadcast television content from a broadcast television content provider;
provide a series of the multiple channels selected by the scheduler to the presentation engine for forwarding over a presentation channel corresponding to the user in response to the user selecting the presentation channel; and
provide one of the multiple channels to the presentation engine for forwarding over the one of the multiple channels to the user in response to the user selecting the one of the multiple channels.
